# EUROPEAN PATENT SPECIFICATION

(11) **EP 4 171 929 B1**
(45) Date of publication and mention of the grant of the patent: **01.05.2024**
(21) Application number: 21740251.0
(22) Date of filing: 24.06.2021
(51) Int. Cl.: B29C 65/02, B29C 65/04, B29C 65/08, B29C 65/10, B29C 65/36, B29C 65/48, B65B 7/18, B65B 51/14, B29C 65/78, B29K 101/12

(54) **WELDING GROUP FOR PACKAGING MACHINES**
SCHWEISSGRUPPE FÜR VERPACKUNGSMASCHINEN
GROUPE DE SOUDAGE POUR MACHINES D'EMBALLAGE

(30) Priority: 30.06.2020 IT 202000015703
(43) Date of publication of application: 03.05.2023
(73) Proprietor: GALDI S.R.L., 31038 Fraz. Postioma Paese (TV) (IT)
(72) Inventor: GUADAGNIN, Alberto, 31038 Fraz. Postioma Paese (TV) (IT); SPERINDIO, Damiano, 31038 Fraz. Postioma Paese (TV) (IT); BORTIGNON, Alessandro, 31038 Fraz. Postioma Paese (TV) (IT)
(74) Representative: Burchielli, Riccardo
(86) International application number: PCT/IT2021/050197
(87) International publication number: WO 2022/003742

(56) References cited:
- WO-A1-2012/031877

## Description

This invention relates generically to a welding group for packaging machines, a so-called "triaxial gable top sealer", and in particular, to a sealing press for packaging machines of the toggle type with adjustable servomotor-driven movement.

This invention is therefore included in the field of "form fill seal" type packaging machines for liquid or pasty food products and in particular, in the field of devices adapted to weld together two or more panels made of heat-sealable plastic material or plastic-coated cardboard.

On the market, there are various machines and technologies for forming, filling and sealing packages made with plastic film or cardboard which is poly-laminated with plastics, which make it possible to obtain containers filled with various products, e.g. liquid or pasty products, such as fruit juices, milk, wine, etc., ready for sale to the final consumer.

The packaging machines currently on the market usually operate according to the following technique.

A more or less thin plastic film or cardboard coated on both sides with a more or less thin plastic material is first folded and welded longitudinally to form a tube of the same dimensions as the perimeter of the final container. The bottom is then formed by means of a transverse weld along the length of the container, and filled with the product, while the top is sealed with a subsequent transverse weld, thus obtaining a container of various sizes, varying lengths, which is hermetically sealed and ready for the final consumer.

Other techniques provide starting from a container that has already been cut, die-cut and longitudinally welded.

The container is opened in the packaging machine by folding and welding the bottom and filling it with product, then folding and welding the top to form a sealed package ready for consumption.

There are various ways to weld and seal such containers, e.g. hot bar, cold sealing, impulse sealing, hot air sealing, high frequency sealing, ultrasonic sealing, magnetic induction sealing, hot glue sealing, etc.

This is normally done using devices with two or more arms with jaws, which firmly compress the panels of the package together so that the plastic material of the container previously brought to the melting temperature is cooled.

This type of welding is fairly easy to carry out with uniform and thin thicknesses of the materials to be welded, such as plastic film, but requires considerable power when there are one or more overlapping panels, as happens for example when folding a poly-laminated cardboard container.

Great importance is attributed to the perfect welding and sealing of the package, both by the product packer who has to present his/her product in the most attractive way possible, and by the final consumer who expects a perfectly sealed container in order to have the maximum guarantee that the product retains all its organoleptic properties until its expiry date.

For this reason, the sealing systems in all packaging machines are of fundamental importance, but very solid and bulky structures which sometimes restrict access for cleaning or maintenance, are required in order to make good welds.

Although cleanliness and simplicity are important in machines that pack fresh products, machines that pack products with a long shelf-life are becoming increasingly popular in the market, where ease of cleaning and maintaining safe hygienic conditions during packaging, as well as the tightness of the welds, result in a more or less prolonged shelf-life of the product.

Moreover, the very development of the packaging industry requires a certain flexibility of the machines, which have to be developed to be able to work with cartons with increasingly diverse and sophisticated shapes and fine and/or coloured exterior designs.

A welding group for packaging machines having technical features which can be considered as state of the art closest to the following invention, features which are present in the preamble to claim 1 below, are described, for example in document WO2012/031877A1.

The aim of this invention is therefore to make a welding group for packaging machines, which enables optimum forming and sealing of the cardboard of the containers.

A further aim of the invention is to make a welding group for packaging machines, which is efficient and functional and at the same time, structurally simple, relatively space-saving and operatively fast, as compared to the known art.

A further aim of this invention is to make a welding group for packaging machines, which requires less maintenance and which results in greater cleanliness and working precision than the known art.

These and other aims are achieved by a welding group for packaging machines according to appended claim 1.

Other detailed features are in the dependent claims.

Advantageously, the top of the carton or container is formed by the thrust of a pair of jaws of a sealing press, whose trajectory follows the ideal closure of the carton.

The press movement axes are individually configured and the final trajectory of the jaws is achieved by interpolating the available axes.

The alignment of the panels that form the top of the carton and any correction from the ideal alignment occurs by delaying and accelerating the movement of the two axes adapted to move the kinematic mechanism of the jaws.

In addition, the group is able to work at the same time with containers with symmetrical and asymmetrical tops, without the need for manual operations.

Advantageously, the torque used during the welding process is always under control thanks to the torque control of the motors, and the welding pressure is high thanks to the use of a toggle system, the force of which is adjustable for each pair of jaws.

Further advantages of the system are the complete independence of the sealing press from the entire packaging machine, as the operation of the press is independent of the rest of the movements.

In addition, all the adjustments required for the correct operation of the group are made at machine surface level thanks to a simple micro-adjustment system.

Finally, the entire welding group is designed to work in acidic environments and the design, as well as the choice of components, aims to ensure the robustness of the entire group, as well as the hygiene of its function.

This invention will now be described, by way of non-limiting example, according to a preferred and specific but non-limiting embodiment thereof, and with particular reference to the appended figures, wherein:

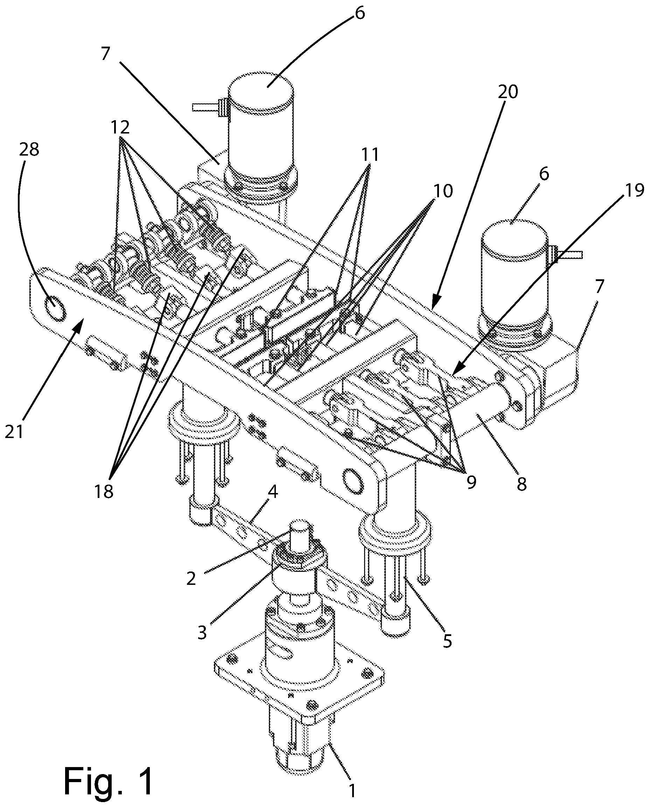

- Figure 1 is a perspective view of a welding group of a packaging machine according to this invention;

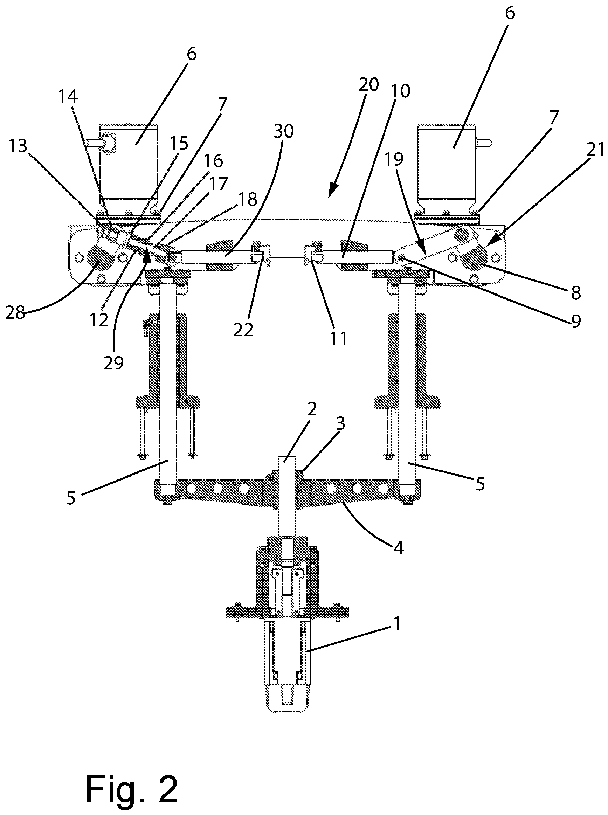

- Figure 2 is a front view of the welding group in Figure 1, according to this invention.

With reference to the above figures, containers to be closed and welded are positioned at the welding group the object of this invention by an in-line transport system of a packaging machine.

The aforesaid welding group the object of the invention comprises a sealing press 20 formed by a body or upper frame 21, which horizontally moves a set of opposing jaws 11, 22 and which controls the operating torque, while a vertical movement of the group, carried out by means of a motor 1 placed below the work top of the filling machine, allows moving the frame 21 and the whole sealing press 20 in vertical direction.

The whole sealing press 20 is designed to make the jaws 11, 22 perform a closing movement identical to the natural closing movement of the container.

In practice, the vertical movement motor 1 sets in motion the ball screw 2, whose flange 3 is fixed to a double connection arm 4 which joins two vertical pins 5.

The vertical pins 5 in turn support and move the entire sealing press 20 downwards so that the lower dead point of this motion is the top (ridge) of the upper portion (top) of the carton to be closed and welded.

During this downward movement, each servomotor 6, located on either side of the upper body 21, sets in motion a respective reducer 7, which in turn rotates a respective pin 8, 28.

In particular, one of the pins 8 positioned at one of the sides of the body 21 is connected, by means of a mechanical toggle return system with a fixed connecting rod 19, to push forks 9 in such a way that the toggle system allows the transformation of the rotary movement of the pin 8 into a linear movement necessary to slide a first set of thrust pins 10 connected to the forks 9, which allow the activation of a first set of jaws 11.

On the side opposite to the pin 8, the linear movement of another set of thrust pins 30 is obtained by actuating the pin 28, by a respective servomotor 6 and its reducer 7, and by means of a mechanical toggle return system with a flexible spring connecting rod 29.

This return system with a flexible spring connecting rod 29 is required to adjust the welding power of another set of jaws 22 placed in front of the jaws 11.

In this case, the rotation of the pin 28 results in the compression of the springs 12 by means of the pins 13 which act on the relative flanges 15 inside the respective housings obtained inside the pin 28, the compression of the springs 12 which, by means of the flanges 16, 17 and thanks to the elements 18 which move the thrust pins 30, discharge a very high power at the meeting point between the jaws 11 and the jaws 22 which can be adjusted by means of the aforementioned springs 12 and which is able to ensure an effective welding safety even in the presence of significant differences in thickness of the material of the container to be welded. Thus, the interpolation of the vertical movement of the pins 5 and the upper body 21 and the horizontal movement of the thrust pins 10, 30 causes the jaws 11, 22 to follow a trajectory similar to a circumference arc necessary to correctly form the joint of the top edges of the carton to be welded.

The power is maintained during the entire closing time of the jaws 11, 22 until the container starts again, i.e. after the welding has been completed.

When the welding process is complete, the group performs the opposite movement, i.e. it opens and is raised up to the starting position and as a result, the transport system of the packaging machine moves the welded containers to the next station and brings further new containers to be welded into the welding position.

According to further embodiments, advantageously a possible correction of the positioning of the edges to be welded of the top of each container can take place while delaying the end or the beginning of the rotation of one of the servomotors 6 with respect to the other, so as to delay or anticipate the arrival of a set of jaws 11 or 22.

Where the characteristics and the techniques mentioned in the following claims are followed by reference signs, the reference signs have been used only with the aim of increasing the intelligibility of the claims themselves and, consequently, the reference signs do not constitute in any way a limitation to the interpretation of each element identified, purely by way of example, by the reference signs.

## Claims

1. Packaging machine for containers to be closed and welded, comprising a welding group of said containers and a transport system of said containers, wherein said welding group is placed in line on said transport system and comprises a sealing press (20) having a frame (21), which horizontally moves opposing jaws (11, 22), a plurality of servomotors (6) positioned on opposite sides of said frame (21), and adapted to rotate, by means of respective reducers (7), relative horizontal pins (8, 28), which are connected, by means of toggle return systems allowing the transformation of a rotary movement into a linear movement, to thrust elements (10, 30) connected to said opposing jaws (11, 22), **characterized in that** said frame (21) is moved in vertical direction by means of a motor (1) placed below said frame (21) and connected to supporting vertical pins (5).

2. Packaging machine according to claim 1, **characterized in that** said motor (1) drives a ball screw (2) which has a flange (3) fixed to a double connection arm (4) which joins said vertical pins (5).

3. Packaging machine according to at least one of the preceding claims, **characterized in that**, in a first operative welding position, said vertical pins (5) move said frame (21) downwards to a lower dead point corresponding to the top of a portion or upper edge to be welded of at least one of said containers.

4. Packaging machine according to at least one of the preceding claims, **characterized in that** a first pin (8) of said horizontal pins (8, 28) is positioned at a side of said frame (21) and is connected, through a mechanical toggle return system with a fixed connecting rod (19), to push forks (9) in such a way that a rotary movement of said first pin (8) is transformed into a linear movement adapted to slide a first set of thrust pins (10) connected to said push forks (9), which drive a first set (11) of said jaws (11, 22).

5. Packaging machine according to claim 4, **characterized in that** a second pin (28) of said horizontal pins (8, 28) is positioned on said frame (21) on opposite side with respect to said first pin (8) and is connected, by means of a mechanical toggle return system with a flexible spring connecting rod (29), in such a way that a rotary movement of said second pin (28) is transformed into a linear movement adapted to slide a second set of thrust pins (30) connected to said mechanical toggle return system with a flexible spring connecting rod (29), which drive a second set (22) of jaws opposing said first set of jaws (11).

6. Packaging machine according to claim 5, **characterized in that** said rotary movement of said second pin (28) results in a compression, by means of respective pins (13) acting on relative flanges (15), of a series of springs (12) which, by means of said second series of thrust pins (30), unload an adjustable power at the meeting point of the opposing jaws (11, 22).

7. Packaging machine according to at least one of the preceding claims, **characterized in that** said first set (11) and said second set of jaws (22), which act by joining the upper edges to be welded of at least one of said containers, perform a trajectory similar to a circumference arc.

8. Packaging machine according to at least one of the preceding claims, **characterized in that**, in a second resting position, said first set (11) and said second set of jaws (22) move away from each other and said frame (21) is raised, while said transport system of said packaging machine moves at least one of said welded containers to a subsequent station of said machine and brings further containers to be welded into a welding position.

9. Packaging machine according to at least one of the preceding claims, **characterized in that** said first set of jaws (11) is delayed or anticipated in movement with respect to said second set of jaws (22), by means of actuation commands provided to each of said respective servomotors (6).

## Patentansprüche

1. Verpackungsmaschine für zu verschließende und zu verschweißende Behälter, umfassend eine Schweißgruppe für die Behälter und ein Transportsystem für die Behälter, wobei die Schweißgruppe in einer Linie auf dem Transportsystem angeordnet ist und eine Schweißpresse (20) mit einem Rahmen (21), der gegenüberliegende Backen (11, 22) horizontal bewegt, und eine Vielzahl von Servomotoren (6) umfasst, die auf gegenüberliegenden Seiten des Rahmens (21) positioniert sind und geeignet sind, mittels jeweiliger Untersetzungsgetriebe (7) relative horizontale Stifte (8, 28) zu drehen, die mittels Kniehebel-Rückstellsystemen, die die Umwandlung einer Drehbewegung in eine lineare Bewegung ermöglichen, mit Schubelementen (10, 30) verbunden sind, die mit den gegenüberliegenden Backen (11, 22) verbunden sind, **dadurch gekennzeichnet, dass** der Rahmen (21) in vertikaler Richtung mittels eines Motors (1) bewegt wird, der unterhalb des Rahmens (21) angeordnet und mit tragenden vertikalen Stiften (5) verbunden ist.

2. Verpackungsmaschine nach Anspruch 1, **dadurch gekennzeichnet, dass** der Motor (1) eine Kugelumlaufspindel (2) antreibt, die einen Flansch (3) aufweist, der an einem doppelten Verbindungsarm (4) befestigt ist, der die vertikalen Stifte (5) verbindet.

3. Verpackungsmaschine nach mindestens einem der vorherigen Ansprüche, **dadurch gekennzeichnet, dass** die vertikalen Stifte (5) in einer ersten funktionsfähigen Schweißposition den Rahmen (21) nach unten zu einem unteren Totpunkt bewegen, der der Oberseite eines zu schweißenden Teils oder oberen Rands von mindestens einem der Behälter entspricht.

4. Verpackungsmaschine nach mindestens einem der vorherigen Ansprüche, **dadurch gekennzeichnet, dass** ein erster Stift (8) der horizontalen Stifte (8, 28) an einer Seite des Rahmens (21) angeordnet ist und über ein mechanisches Kniehebelsystem mit einer festen Verbindungsstange (19) verbunden ist, mit Druckgabeln (9) derart verbunden ist, dass eine Drehbewegung des ersten Stifts (8) in eine lineare Bewegung umgewandelt wird, die geeignet ist, einen ersten Satz von Druckstiften (10) zu verschieben, die mit den Druckgabeln (9) verbunden sind, welche einen ersten Satz (11) der Backen (11, 22) antreiben.

5. Verpackungsmaschine nach Anspruch 4, **dadurch gekennzeichnet, dass** ein zweiter Stift (28) der horizontalen Stifte (8, 28) auf dem Rahmen (21) auf der gegenüberliegenden Seite in Bezug auf den ersten Stift (8) positioniert ist und mittels eines mechanischen Kniehebel-Rückstellsystems mit einer flexiblen Federverbindungsstange (29) verbunden ist, sodass eine Drehbewegung des zweiten Stifts (28) in eine lineare Bewegung umgewandelt wird, die geeignet ist, einen zweiten Satz von Druckstiften (30) zu verschieben, die mit dem mechanischen Kniehebel-Rückstellsystem mit einer flexiblen Federverbindungsstange (29) verbunden sind, die einen zweiten Satz (22) von Backen antreiben, die dem ersten Satz von Backen (11) gegenüberliegen.

6. Verpackungsmaschine nach Anspruch 5, **dadurch gekennzeichnet, dass** die Drehbewegung des zweiten Stifts (28) dazu führt, dass mittels entsprechender Stifte (13), die auf entsprechende Flansche (15) wirken, eine Reihe von Federn (12) zusammengedrückt wird, die mittels der zweiten Reihe von Druckstiften (30) eine einstellbare Kraft am Treffpunkt der gegenüberliegenden Backen (11, 22) entlasten.

7. Verpackungsmaschine nach mindestens einem der vorherigen Ansprüche, **dadurch gekennzeichnet, dass** der erste Satz (11) und der zweite Satz von Backen (22), die durch Verbinden der zu verschweißenden oberen Ränder von mindestens einem der Behälter wirken, eine einem Umfang ähnliche Bahn ausführen.

8. Verpackungsmaschine nach mindestens einem der vorherigen Ansprüche, **dadurch gekennzeichnet, dass** sich in einer zweiten Ruheposition der erste Satz (11) und der zweite Satz von Backen (22) voneinander weg bewegen und der Rahmen (21) angehoben wird, während das Transportsystem der Verpackungsmaschine mindestens einen der geschweißten Behälter zu einer nachfolgenden Station der Maschine bewegt und weitere zu schweißende Behälter in eine Schweißposition bringt.

9. Verpackungsmaschine nach mindestens einem der vorherigen Ansprüche, **dadurch gekennzeichnet, dass** der erste Satz von Stiften (11) mittels Betätigungsbefehlen, die jedem der jeweiligen Servomotoren (6) bereitgestellt werden, in seiner Bewegung gegenüber dem zweiten Satz von Backen (22) verzögert oder vorweggenommen wird.

## Revendications

1. Machine d'emballage pour récipients à fermer et à souder, comprenant un groupe de soudure desdits récipients et un système de transport desdits récipients, dans lequel ledit groupe de soudure est placé en ligne sur ledit système de transport et comprend une presse à sceller (20) ayant une trame (21), qui déplace horizontalement des mâchoires opposées (11, 22), une pluralité de servomoteurs (6) positionnés sur les côtés opposés de ladite trame (21), et aptes à faire tourner, au moyen de réducteurs respectifs (7), des broches horizontales relatives (8, 28), qui sont reliés, au moyen de systèmes de retour à bascule mécanique permettant la transformation d'un mouvement rotatif en un mouvement linéaire, à des éléments de poussée (10, 30) reliés auxdites mâchoires opposées (11, 22), **caractérisé en ce que** ladite trame (21) est déplacée dans le sens vertical au moyen d'un moteur (1) placé sous ladite trame (21) et reliée à des broches verticales d'appui (5).

2. Machine d'emballage selon la revendication 1, **caractérisée en ce que** ledit moteur (1) entraîne une vis à billes (2) qui possède une bride (3) fixée à un bras de connexion double (4) qui relie lesdites broches verticales (5).

3. Machine d'emballage selon au moins l'une des revendications précédentes, **caractérisée en ce que**, dans une première position opérationnelle de soudage, lesdites broches verticales (5) déplacent ladite trame (21) vers le bas jusqu'à un point mort inférieur correspondant au sommet d'une portion ou d'un bord supérieur à souder d'au moins l'un desdits récipients.

4. Machine d'emballage selon au moins l'une des revendications précédentes, **caractérisée en ce qu'**une première broche (8) desdites broches horizontales (8, 28) est positionnée sur un côté de ladite trame (21) et est reliée, par un système de retour à bascule mécanique, à une bielle fixe (19), à des fourches de poussée (9) de telle sorte qu'un mouvement de rotation de ladite première broche (8) est transformé en un mouvement linéaire adapté au glissement d'un premier jeu de broches de poussée (10) reliées auxdites fourches de poussée (9), qui entraînent un premier jeu (11) desdites mâchoires (11, 22).

5. Machine d'emballage selon la revendication 4, **caractérisée en ce qu'**une seconde broche (28) desdites broches horizontales (8, 28) est positionnée sur ladite trame (21) du côté opposé par rapport à ladite première broche (8) et est reliée, au moyen d'un système de retour à bascule mécanique, à une bielle à ressort flexible (29), de telle sorte qu'un mouvement rotatif de ladite seconde broche (28) soit transformé en un mouvement linéaire adapté au glissement d'une seconde série de broches de poussée (30) reliées audit système de retour à bascule mécanique avec une bielle à ressort flexible (29), qui entraînent une seconde série (22) de mâchoires opposées à ladite première série de mâchoires (11) .

6. Machine d'emballage selon la revendication 5, **caractérisée en ce que** le mouvement de rotation de la seconde broche (28) entraîne la compression, par des broches respectives (13) agissant sur des brides relatives (15), d'une série de ressorts (12) qui, par l'intermédiaire de la seconde série de broches de poussée (30), déchargent une puissance réglable au point de rencontre des mâchoires opposées (11, 22).

7. Machine d'emballage selon au moins l'une des revendications précédentes, **caractérisée en ce que** ledit premier jeu (11) et ledit second jeu de mâchoires (22), qui agissent en joignant les bords supérieurs à souder d'au moins l'un desdits récipients, effectuent une trajectoire similaire à un arc de circonférence.

8. Machine d'emballage selon au moins l'une des revendications précédentes, **caractérisée en ce que**, dans une seconde position de repos, ledit premier jeu (11) et ledit second jeu de mâchoires (22) s'éloignent l'un de l'autre et ladite trame (21) est relevé, tandis que le système de transport de ladite machine d'emballage déplace au moins l'un desdits récipients soudés vers une station suivante de ladite machine et amène d'autres récipients à souder dans une position de soudage.

9. Machine d'emballage selon au moins l'une des revendications précédentes, **caractérisée en ce que** ledit premier jeu de mâchoires (11) est retardé ou anticipé dans son mouvement par rapport audit second jeu de mâchoires (22), au moyen de commandes d'actionnement fournies à chacun desdits servomoteurs (6) respectifs.
